# EUROPEAN PATENT APPLICATION

(11) **EP 3 132 969 A1**
(43) Date of publication of application: **22.02.2017**
(21) Application number: 16184738.9
(22) Date of filing: 18.08.2016
(51) Int. Cl.: B60N 3/06, B60N 2/02, B60N 2/14

(54) **VEHICLE SEAT AND VEHICLE**

(30) Priority: 20.08.2015 JP 2015162499
(71) Applicant: Toyota Jidosha Kabushiki Kaisha, Toyota-shi, Aichi-ken, 471-8571 (JP)
(72) Inventor: AKIMOTO, Takashi, TOYOTA-SHI, AICHI-KEN, 471-8571 (JP)
(74) Representative: Intès, Didier Gérard André

(57) **Abstract**

A vehicle seat (20) includes a seat cushion (22) that is rotatably joined to a floor portion (10) of a vehicle such that an axial direction of the seat cushion (22) is aligned in an up-down direction of the seat (20), and that supports a buttocks portion of a seated vehicle occupant (P); and a footrest (40) that is joined to the seat cushion (22) and supports soles of feet of the seated vehicle occupant (P), and that is placed in a raised position in which, when seen in a seat side view, the footrest (40) slopes upwards towards a seat rear side such that heel portions of the seated vehicle occupant (P) are raised up, and a rear-end portion (40R) of the footrest is placed at a seat rear side of a front end of the seat cushion (22).

## Description

### BACKGROUND

### [Technical Field]

The present disclosure relates to a vehicle seat and a vehicle.

### [Related Art]

In recent years, various technologies relating to automated driving support devices for vehicles (i.e., for automobiles) have been proposed. In vehicles that are provided with these automated driving support devices, for example, one development has been to enable the front seats (i.e., both the driver's seat and the passenger's seat) to be rotated such that they face towards the rear of the vehicle, so as to create a seat layout in which the front seats and the rear seats are facing each other. For this reason, it is preferable for the vehicle seats to be constructed as rotatable seats so that the seat occupants are able to rotate inside the vehicle cabin while remaining seated in the seats.

In Japanese Patent Application Laid-Open (JP-A) No. 2000-272386, a rotatable vehicle seat is disclosed. In this vehicle seat, when a seat occupant is getting in or out of a seat, the seat occupant is able to rotate the vehicle seat from a state in which it faces towards the front of the vehicle to a state in which it faces towards the outside in the vehicle transverse direction while remaining seated on the seat cushion. A footrest frame (i.e., a footrest) is provided for this vehicle seat, and when this footrest frame is in use the footrest frame protrudes toward the seat front side below the seat cushion.

However, when the vehicle seat described in the aforementioned publications is constructed such that a vehicle occupant is able to rotate inside the vehicle cabin while remaining seated, then the following situations occur. Namely, in the above-described vehicle seat, because the entire feet of the seated vehicle occupant protrude beyond the seat cushion toward the seat front side, when the vehicle seat is rotated, there is a possibility of the feet (i.e., the toes) of the seated vehicle occupant being impeded by nearby interior components (such as other seats or components and the like located inside the vehicle cabin). In particular, in vehicles that have comparatively small dimensions in the vehicle transverse direction, when a vehicle seat is being rotated there is a possibility that the feet (i.e., the toes) of the seated vehicle occupant will be impeded by another vehicle seat that is adjacent thereto in the vehicle transverse direction.

### SUMMARY

In consideration of the above-described circumstances, the present disclosure provides a vehicle seat that can be rotated inside a vehicle cabin while preventing the feet of the seated vehicle occupant being impeded by interior components, and a vehicle including such a vehicle seat.

The vehicle seat of a first aspect of the present disclosure includes a seat cushion that is rotatably joined to a floor portion of a vehicle such that an axial direction of the seat cushion is aligned in an up-down direction of the seat, and that supports a buttocks portion of a seated vehicle occupant; and a footrest that is joined to the seat cushion and supports soles of feet of the seated vehicle occupant, and that is placed in a raised position in which, when seen in a seat side view, the footrest slopes upwards towards a seat rear side such that heel portions of the seated vehicle occupant are raised up, and a rear end portion of the footrest is placed at a seat rear side of a front end of the seat cushion.

In a vehicle seat having the above-described structure, a seat cushion that supports the buttocks portion of a seated vehicle occupant is rotatably joined to a floor portion of the vehicle such that the axial direction of the seat cushion is aligned in the seat up-down direction. As a result, it is possible, for example, to rotate the vehicle seat from a state in which it faces towards the vehicle front side (or towards the vehicle rear side) to a state in which it faces towards the vehicle rear side (or towards the vehicle front side). Moreover, a footrest that supports the soles of the feet of the seated vehicle occupant is also joined to the seat cushion.

Here, the footrest is placed in the raised position in which, when seen in a seat side view, it slopes diagonally upwards towards the rear of the seat. Because of this, the feet of the seated vehicle occupant that are resting on the footrest also slope diagonally upwards towards the rear of the seat when seen in a seat side view, and the heel portions of the seated vehicle occupant are raised up. By employing this structure, the length in the seat front-rear direction of the feet of the seated vehicle occupants that are resting on the footrest can be shortened compared to a case in which the footrest is simply aligned horizontally.

Moreover, the rear portion of the footrest is located further to the seat rear side than the front end of the seat cushion. Namely, in the raised position, the rear portion of the footrest, which is supporting the heel portions of the seated vehicle occupant, is located further to the seat rear side than the front end of the seat cushion. Because of this, the heel portions of the vehicle occupant can be positioned such that they are housed underneath the seat cushion. As a consequence, the protruding distance to which the feet resting on the footrest protrude from the seat cushion towards the seat front side can be reduced. Accordingly, by rotating the seat cushion while the feet of the seated vehicle occupant are resting on the footrest, it is possible to prevent the feet of the seated vehicle occupant from being impeded by any interior components that may be located around the vehicle seat.

In this manner, according to the present aspect, the feet of a seated vehicle occupant can be rotated inside a vehicle cabin without being impeded by interior components inside the cabin.

The present aspect may further include a moving mechanism that joins the footrest to the seat cushion, the moving mechanism causing the footrest to move between a standby position, in which the footrest is located at a seat front side of the raised position, and the raised position, wherein, in the standby position, the rear end portion of the footrest lies directly on the floor portion.

In a vehicle seat having the above-described structure, the footrest is moved by an operation of the moving mechanism between the standby position, which is located at the seat front side of the raised position, and the raised position. Because of this, when the vehicle seat is in normal use (i.e., other than when the vehicle seat is being rotated), the footrest can be placed in the standby position which is located at the seat front side of the raised position. In this standby position the rear-end portion of the footrest lies directly on the floor portion. Because of this, the feet of the seated vehicle occupant that are resting on the footrest which is in the standby position are aligned substantially horizontally in a position at the seat front side of the seat cushion. As a consequence, the comfort of the seated vehicle occupant can also be maintained when the feet of the seated vehicle occupant are resting on the footrest during the normal use of the vehicle seat.

In the present aspect, the moving mechanism may include: a drive motor that is located at a seat lower side of the seat cushion; a rotation shaft that is located at the seat rear side of the footrest, and that is rotated around an axis of the rotation shaft by drive force from the drive motor, an axial direction of the rotation shaft being a seat transverse direction; a rotating member whose front-end portion is rotatably joined to the rear end portion of the footrest with the seat transverse direction taken as the axial direction, and whose rear-end portion is fixed to the rotation shaft such that the rear-end portion rotates integrally with the rotation shaft; and an urging member that intervenes between the rotating member and the footrest, and that urges the front-end portion of the footrest towards the seat lower side, wherein the drive motor causes the front-end portion of the rotating member to rotate in the seat up-down direction, so that the footrest is moved between the standby position and the raised position.

In a vehicle seat having the above-described structure, when the rotation shaft is being rotated by drive force from the drive motor, the rotating member rotates around the axis of the rotation shaft. In addition, the front-end portion of the rotating member is made to rotate in the seat up-down direction so that the footrest is moved between the standby position and the raised position. Because the front-end portion of the footrest is urged towards the seat lower side by the urging member, the front-end portion of the footrest moves between the standby position and the raised position while the front-end portion of the footrest slides smoothly along the floor portion. Because of this, the footrest can be moved between the standby position and the raised position without the moving mechanism needing to be placed in a location at the seat front side of the footrest.

The present aspect may further include an angle sensor that detects an angle of rotation of the seat cushion relative to the floor portion; and a control unit that is electrically connected to the angle sensor and the drive motor, and that controls operations of the drive motor, wherein the control unit causes the drive motor to operate in accordance with the angle of rotation of the seat cushion so as to place the footrest in the standby position or the raised position.

In a vehicle seat having the above-described structure, the drive motor is driven by the control unit in accordance with the angle of rotation of the seat cushion such that the footrest is placed in the standby position or the raised position. Because of this, for example, during the rotation of the vehicle seat, the footrest can be moved automatically from the standby position to the raised position through the rotation position where the space at the seat front side of the vehicle seat is the small. Consequently, the convenience for the seated vehicle passenger can be improved.

In the present aspect, the footrest may be formed in a plate shape, the front-end portion of the footrest may be formed as a stopper portion that is bent towards a seat upper side, and the stopper portion may include a bent portion at a proximal end portion thereof, the bent portion being curved in an arc shape when seen in a seat side view.

In a vehicle seat having the above-described structure, any relative movement of the feet of the seated vehicle occupant on the footrest towards the seat front side can be limited by the stopper portion, and the toes of the seated vehicle occupant can be protected by the stopper portion. Moreover, the footrest can move between the standby position and the raised position, and the front-end portion of the footrest can be made to slide smoothly over the floor portion.

Another aspect of the present disclosure is a vehicle that includes the vehicle seat according to the first aspect; and an automated driving support device that switches between automated driving and manual driving, wherein, after the automated driving support device has switched the manual driving to the automated driving, the seat cushion is enabled to rotate relative to the floor portion.

In a vehicle having the above-described structure, when a vehicle is switched from manual driving to automated driving by an automated driving support device, the vehicle seat can be rotated and the vehicle seat layout can be altered.

### BRIEF DESCRIPTION OF THE DRAWINGS

Exemplary embodiments of the present disclosure will be described in detail based on the following figures, wherein:
FIG. 1 is a side view seen from a seat left side showing a footrest that has been applied to a vehicle seat according to a first embodiment.
FIG. 2 is a side view seen from a seat left side showing the entire vehicle seat shown in FIG. 1.
FIG. 3 is a plan view showing in typical form the interior of a vehicle cabin to which the vehicle seat shown in FIG. 2 has been applied.
FIG. 4 is an explanatory view illustrating in a time series the rotation of a vehicle seat inside the vehicle cabin shown in FIG. 3.
FIG. 5A is a side view seen from a seat left side showing the state of the feet of a seated vehicle occupant when that vehicle occupant is seated in the vehicle seat of a comparative example.
FIG. 5B is a side view seen from a seat left side showing the state of the feet of a seated vehicle occupant when that vehicle occupant is seated in the vehicle seat shown in FIG. 2.
FIG. 6 is a side view seen from a seat left side showing an entire vehicle seat according to a second embodiment.
FIG. 7 is a side view seen from a seat left side showing an enlargement of the footrest shown in FIG. 6.
FIG. 8A is a perspective view seen from a direction diagonally forward and to the left of a seat showing a state in which the footrest shown in FIG. 7 is has been placed in a standby position.
FIG. 8B is a perspective view seen from a direction diagonally forward and to the left of a seat showing a state in which the footrest shown in FIG. 8A is has been moved to a raised position.
FIG. 9 is an exploded perspective view showing disassembled parts of the moving mechanism shown in FIG. 8A.
FIG. 10 is a flowchart illustrating an operation of the vehicle seat according to the second embodiment.

### DETAILED DESCRIPTION

### (First embodiment)

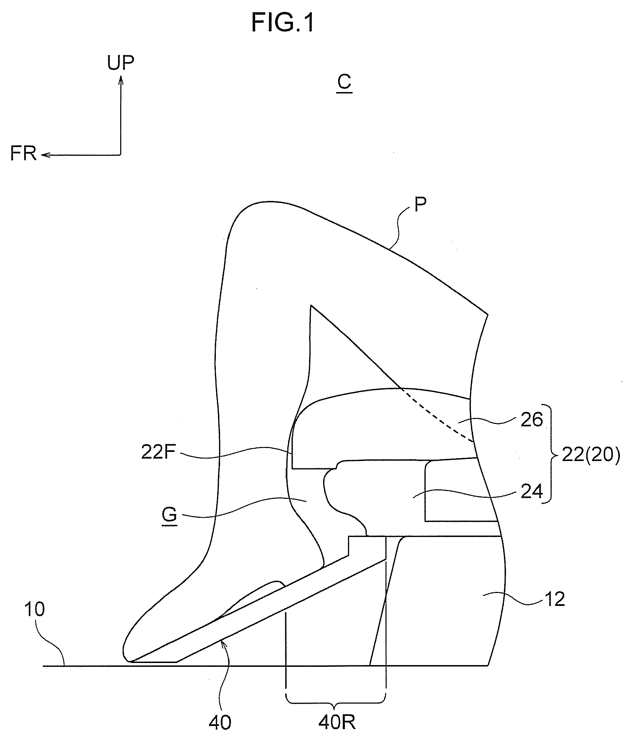

Hereinafter, a vehicle seat 20 according to a first embodiment will be described using FIG. 1 through FIG. 5B. Note that an arrow FR that is shown in the drawings indicates the vehicle front side of a vehicle (i.e., an automobile) V to which the vehicle seat 20 has been applied, while an arrow UP indicates the upper side of the vehicle, and an arrow LH indicates the vehicle left side (i.e., one side in the vehicle transverse direction). Hereinafter, firstly, the vehicle V will be described, and then the vehicle seat 20 will be described.

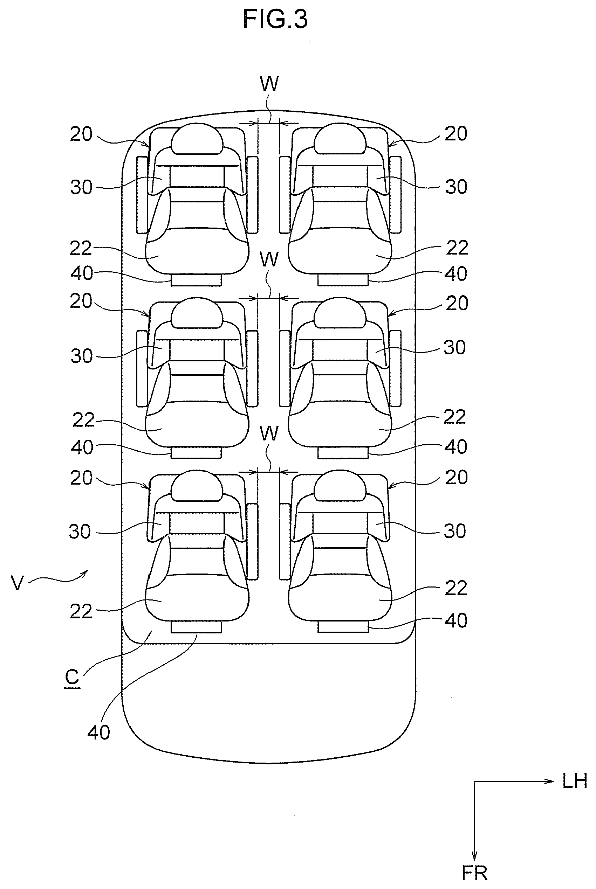

As shown in FIG. 3, the vehicle V is provided with an automated driving support device. The automated driving support device enables the vehicle V to be switched from manual driving to automated driving, or from automated driving to manual driving. Moreover, the vehicle V is constructed as a three-row seating vehicle. Namely, pairs of left and right vehicle seats 20 that are arranged side-by-side in the vehicle transverse direction are arranged in three rows in the vehicle longitudinal direction inside a cabin C of the vehicle V (i.e., inside the vehicle compartment). The pairs of left and right vehicle seats 20 are arranged at a predetermined interval W in the vehicle transverse direction inside the cabin C. Moreover, in FIG. 3, the vehicle seats 20 are arranged so that they face towards the front of the vehicle, and in this state, the seat front side, the seat upper side, and the seat left side of each vehicle seat 20 match respectively the vehicle front side, the vehicle upper side, and the vehicle left side of the vehicle V.

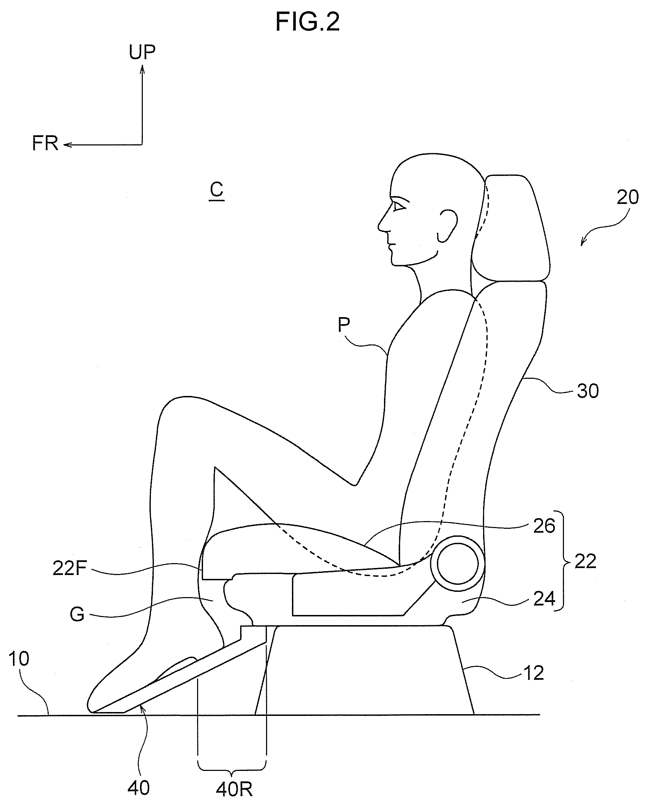

As shown in FIG. 2, pedestal portions 12 on each of which a vehicle seat 20 is individually mounted are provided on a floor portion 10 of the vehicle V. Namely, in the present embodiment, pedestal portions 12 are provided in six locations on the floor portion 10 of the vehicle V. These pedestal portions 12 bulge towards the upper side of the vehicle from the floor portion 10 of the vehicle V, and are formed substantially in a trapezoidal shape when seen in side view. In addition, a top surface of each pedestal portion 12 is aligned substantially horizontally.

### (Vehicle seat 20)

As shown in FIG. 2, each vehicle seat 20 includes a seat cushion 22 that supports the buttocks portion of a seated vehicle occupant P, and a seat back 30 that supports a back portion of the seated vehicle occupant P. The vehicle seat 20 further includes a footrest 40 that supports the soles of the feet of the seated vehicle occupant P.

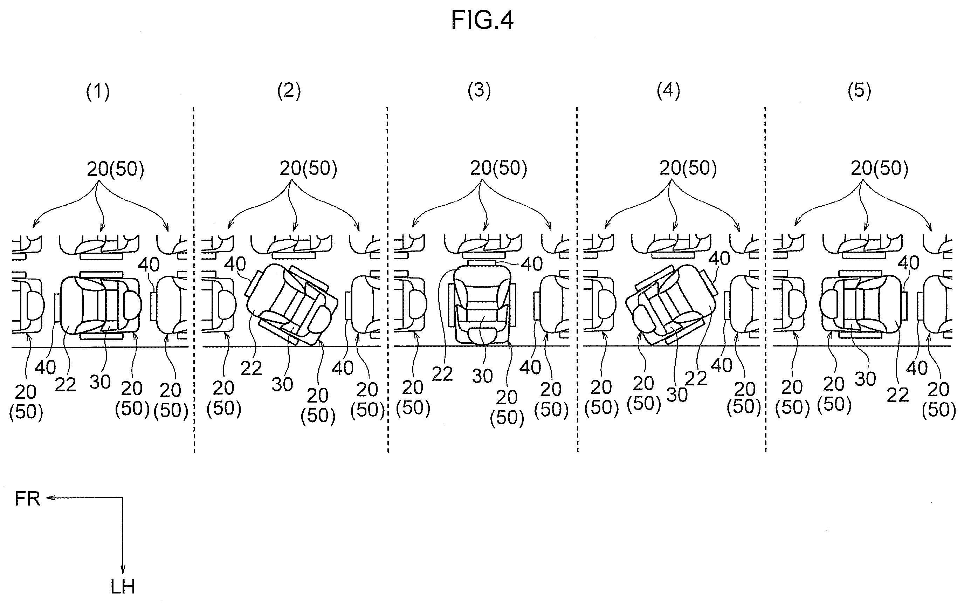

The seat cushion 22 has a cushion frame 24 that forms a framework for the seat cushion 22. This cushion frame 24 is placed at the vehicle upper side of each pedestal portion 12, and is rotatably joined to the pedestal portion 12 with the axial direction of the cushion frame 24 being the up-down direction of the seat (i.e., the up-down direction of the vehicle). Moreover, as shown in FIG. 4, in the present embodiment, the seat cushion 22 is configured to be able to rotate from a state in which it faces towards the front of the vehicle (i.e., the state shown in (1) in FIG. 4; a position referred to below as a 'forward-facing position'), through states in which it faces towards the center in the vehicle transverse direction (i.e., the states shown in (2) through (4) in FIG. 4; positions referred to below as 'rotation positions' (2) through (4) respectively), to a state in which it faces towards the rear of the vehicle (i.e., the state shown in (5) in FIG. 4; a position referred to below as a 'rearward-facing position'). The seat cushion 22 (i.e., the vehicle seat 20) is configured to also be able to rotate from the rearward-facing position, through the rotation positions (4) through (2), to the forward-facing position. Note that, in FIG. 4, the vehicle seat 20 located in the second row counting from the vehicle front side and on the left side of the vehicle is illustrated, however, the other vehicle seats 20 are also configured such that they are able to rotate in the same way.

The seat cushions 22 (i.e., the vehicle seats 20) may be configured such that they can be rotated manually, or they may be configured such that they can be rotated electrically by means of a motor. Furthermore, a locking mechanism (not shown) is provided in each cushion frame 24, and the rotation of the seat cushion 22 (i.e., the vehicle seat 20) is locked by means of this locking mechanism in the forward-facing position or the rearward-facing position of the vehicle seat 20. In addition, a structure is employed in the present embodiment in which, when the vehicle V is switched from manual driving to automated driving by the automated driving support device AD, the locked rotation state of the seat cushion 22 enforced by the locking mechanism is released, and the seat cushion 22 is permitted to rotate on the floor portion 10. When the vehicle seat 20 is being rotated, the distance in the seat front-rear direction between interior components located around the vehicle seat and the footrest 40 (described below) is the narrowest at the rotation position (3) of the vehicle seat 20.

Furthermore, as shown in FIG. 2, the seat cushion 22 has a cushion pad 26 that supports the buttocks portion of the seated vehicle occupant P on the seat upper side of the cushion frame 24. This cushion pad 26 is formed from urethane or the like, and is supported by the cushion frame 24. A front-end portion of the cushion pad 26 (namely, of the seat cushion 22) protrudes toward the seat front side beyond the cushion frame 24, so that a space G is formed between the front-end portion of the seat cushion 22 and the floor portion 10. Note that the surface of the cushion pad 26 is covered by upholstery. A bottom end portion of the seat back 30 is joined to a rear-end portion of the seat cushion 22, so that the seat back 30 is placed in an upright state.

The footrest 40 is formed substantially in a plate shape, and is located at the seat lower side relative to the front-end portion of the seat cushion 22. As shown in FIG. 1, the footrest 40 is positioned such that, when seen in a seat side view, the footrest 40 slopes towards the seat upper side in the seat rear side (hereinafter, this position is referred to as the 'raised position'), and a rear-end portion of the footrest 40 is joined in a fixed manner to a front-end portion of the cushion frame 24. Moreover, a front-end portion of the footrest 40 is lifted towards the seat upper side away from the floor portion 10, so that a slight gap is formed between the front-end portion of the footrest 40 and the floor portion 10. Furthermore, the distance by which the footrest 40 protrudes towards the seat front side beyond the seat cushion 22 is set such that the front end of the footrest 40 is not impeded by another vehicle seat 20 to which it is adjacent in the vehicle transverse direction even when the vehicle seat 20 is in the rotation position (3) (see FIG. 4). By employing this structure, when the seat cushion 22 is rotated relatively to the floor portion 10, the footrest 40 also rotates relatively to the floor portion 10 together with the seat cushion 22.

Furthermore, the footrest 40 is constructed such that the heel portions of a seated vehicle occupant P are supported by a rear-end portion 40R of the footrest 40. This rear-end portion 40R is located at the seat rear side of a front end 22F of the seat cushion 22. Namely, the rear-end portion 40R of the footrest 40 is located within the space G at the seat lower side of the seat cushion 22. In other words, when viewed from the seat upper side, the rear-end portion 40R of the footrest 40 overlaps with the front-end portion of the seat cushion 22. By employing this structure, when the feet of the seated vehicle occupant P are resting on the footrest 40, the heel portions of the seated vehicle occupant P are housed within the space G underneath the seat cushion 22, and at the same time are raised above the floor portion 10.

Next, the operation and effects of the first embodiment will be described.

In the vehicle seat 20 having the above-described structure, the seat cushion 22 is joined to the floor portion 10 such that it is able to rotate relative to the floor portion 10 of the vehicle V, and the footrest 40 which supports the heel portions of the seated vehicle occupant P is joined in a fixed manner to the seat cushion 22.

Once the locked rotation state of the seat cushion 22 that is enforced by the locking mechanism has been released, and the vehicle seat 20 is being rotated from the forward-facing position (or from the rearward-facing position) to the rearward-facing position (or to the forward-facing position) while the seated vehicle occupant P is seated on the vehicle seat 20, the feet of the seated vehicle occupant P may be rested on the footrest 40.

Here, the footrest 40 is placed in the raised position in which, when seen in a seat side view, it slopes diagonally upwards towards the rear of the seat. Because of this, the feet of the seated vehicle occupant P that are resting on the footrest 40 also slope diagonally upwards towards the rear of the seat when seen in a seat side view, and the heel portions of the seated vehicle occupant P are raised up (see FIG. 1). By employing this structure, the length in the seat front-rear direction of the feet of the seated vehicle occupant P that are resting on the footrest 40 can be shortened compared to a case in which the footrest 40 is simply aligned horizontally. Moreover, in the raised position, the rear-end portion 40R of the footrest 40, which is supporting the heel portions of the seated vehicle occupant P, is located further to the seat rear side than the front end 22F of the seat cushion 22. Because of this, the heel portions of the seated vehicle occupant P can be placed such that they are housed within the space G underneath the seat cushion 22. As a consequence, the protruding distance by which the feet of the seated vehicle occupant P protrude in front of the seat cushion 22 can be reduced.

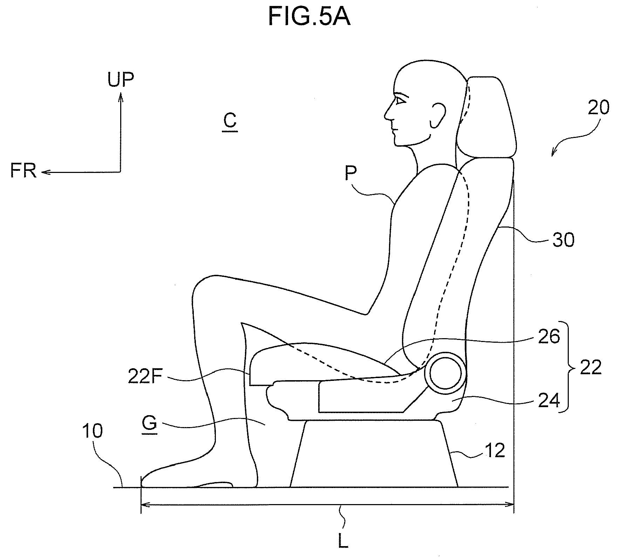

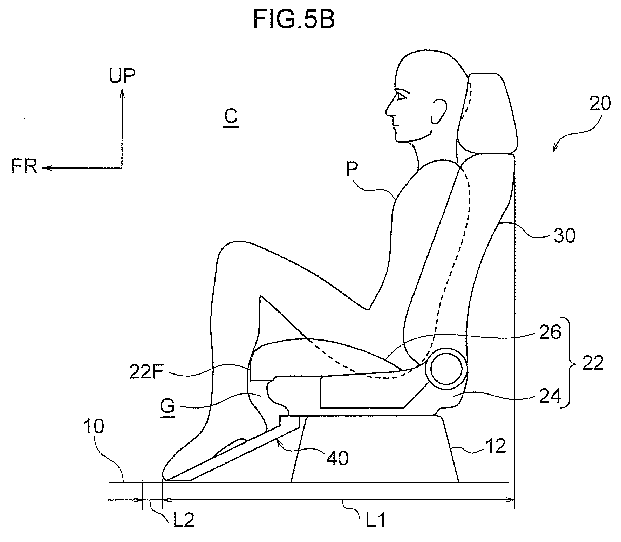

Hereinafter, the above point is illustrated by comparison with a comparative example in which the footrest 40 has been omitted. As shown in FIG. 5A, in the case of a comparative example in which the footrest 40 has been omitted from the vehicle seat 20, the feet of the seated vehicle occupant P are aligned substantially horizontally, and the feet of the seated vehicle occupant P are placed entirely on the seat front side of the seat cushion 22. In contrast to this, as shown in FIG. 5B, in the present embodiment, as described above, the feet of the seated vehicle occupant P slope diagonally upwards towards the rear of the seat when seen in a seat side view, and the heel portions of the seated vehicle occupant P are housed within the space G underneath the seat cushion 22. By employing this structure, compared with the aforementioned comparative example, the distance by which the feet of the seated vehicle occupant P protrude in front of the seat cushion 22 can be reduced. In other words, compared to a length L in the seat front-rear direction of the vehicle seat 20 which includes the seated vehicle occupant P of the comparative example, a length L1 in the seat front-rear direction of the vehicles the 20 which includes the seated vehicle occupant P of the present embodiment can be shortened by the length L2 (see FIGS. 5A and 5B). As a result of this, the rotation space required by the vehicle seat 20 when the vehicle seat 20 is rotated while the seated vehicle occupant P is sitting in the vehicle seat 20 can be reduced. Accordingly, by rotating the seat cushion 22 while the seated vehicle occupant P is resting their feet on the footrest 40, it is possible to prevent the feet of the seated vehicle occupant P from being impeded by any surrounding interior components. In particular, in a vehicle having a comparatively small width in the vehicle transverse direction, the interval W between the pairs of left and right vehicle seats 20 which are placed next to each other in the vehicle transverse direction is narrow, however, even in this type of vehicle, it is possible to effectively prevent the feet of the seated vehicle occupant P from being impeded by another vehicle seat 20 which is adjacent thereto in the vehicle transverse direction when the vehicle seat 20 is being rotated.

Furthermore, as described above, when the feet of a seated vehicle occupant P are resting on the footrest 40, the heel portions of the seated vehicle occupant P are lifted up from the floor portion 10 and are located inside the space G. As a consequence, as shown in FIGS. 5A and 5B, in the present embodiment, the leg portions of the seated vehicle occupant P are placed such that the calves of the seated vehicle occupant P are positioned further at the seat cushion 22 side (i.e., at the seat rear side) compared to the above-described comparative example. Accordingly, even the space occupied by the portion below the knees of the seated vehicle occupant P can be reduced when the vehicle seat 20 is being rotated.

### (Second embodiment)

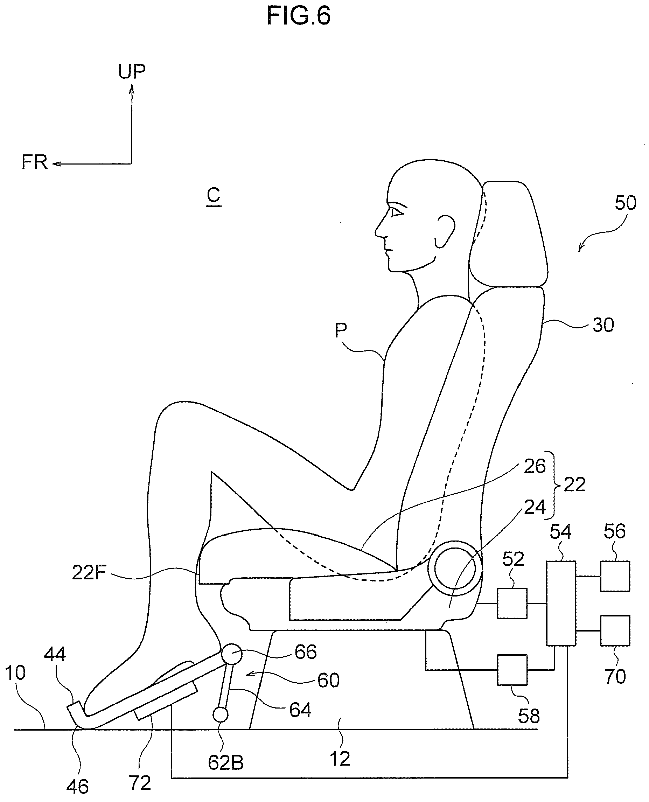

A vehicle seat 50 according to a second embodiment will now be described using FIG. 6 through FIG. 10. This vehicle seat 50 has the same structure as the vehicle seat 20 of the first embodiment except for the points described below. Notes that the same symbols are used in the drawings for components that have the same structure as in the first embodiment.

As shown in FIG. 6, in the second embodiment, a structure is employed in which the vehicle seat 50 has a rotation motor 52, and the seat cushion 22 is rotated relative to the floor portion 10 by this rotation motor 52. The vehicle seat 50 also has a control unit 54. The rotation motor 52 is electrically connected to the control unit 54, and the rotation motor 52 is operated (namely, the seat cushion 22 is rotated) by control performed by the control unit 54. An operating unit 56 is also provided in the vehicle seat 50, and the operating unit is electrically connected to the control unit 54. When a switch (not shown) of the operating unit 56 is turned on by an operation performed by the seated vehicle occupant P, the seat cushion 22 (i.e., the vehicle seat 50) is rotated relative to the floor portion 10 by the control unit 54. Specifically, in the same way as in the first embodiment, the vehicle seat 50 is rotated from a forward-facing position (or a rearward-facing position) to a rearward-facing position (or a forward-facing position).

An angle sensor 58 is provided in the vehicle seat 50, and the angle sensor 58 is electrically connected to the control unit 54. This angle sensor 58 is configured to detect the angle of rotation of the seat cushion 22 relative to the floor portion 10 (i.e., the pedestal portion 12). Based on output signals from the angle sensor 58, the control unit 54 determines whether or not the vehicle seat 50 has arrived at a rotation position (specifically, the rotation position (2) or the rotation position (4) shown in FIG. 4), and operates a moving mechanism 60 (i.e., the footrest 40) (described below) in accordance with the rotation position of the vehicle seat 50.

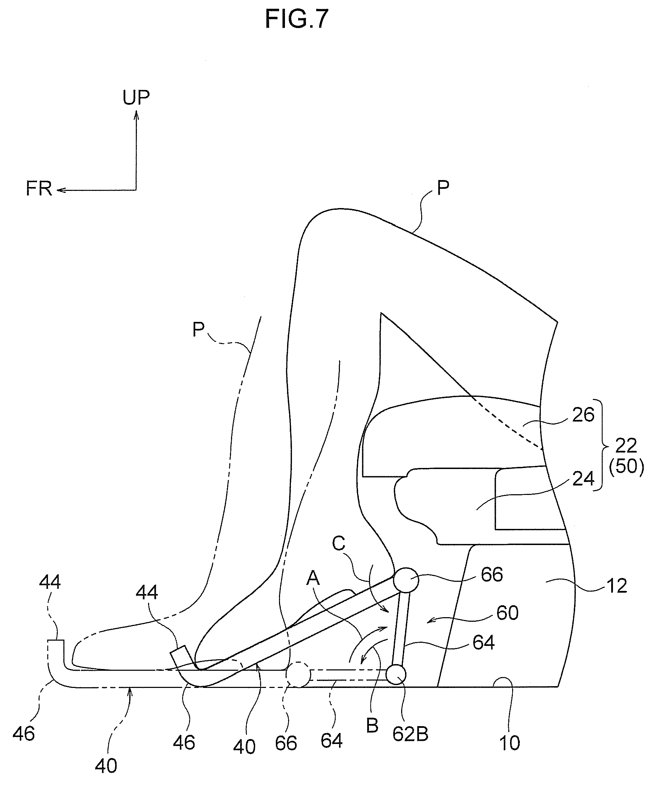

As shown in FIG. 7, in the second embodiment, the footrest 40 is joined to the cushion frame 24 via the moving mechanism 60. The footrest 40 is moved by the moving mechanism 60 to a standby position (i.e., the position shown by the double-dot chain line in FIG. 7), which is located further to the seat front side than the raised position (i.e., the position shown by the solid line in FIG. 7). Namely, the footrest 40 is configured to be moved by the moving mechanism 60 between the standby position and the raised position. Hereinafter, the moving mechanism 60 will be described.

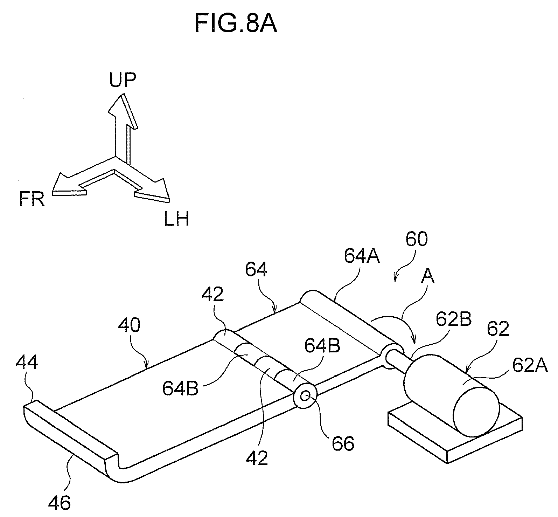

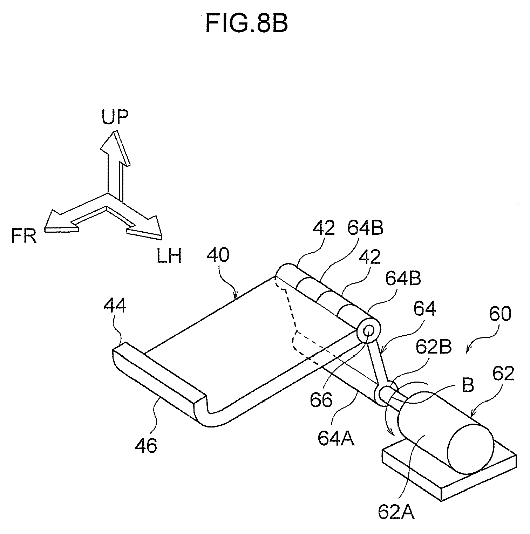

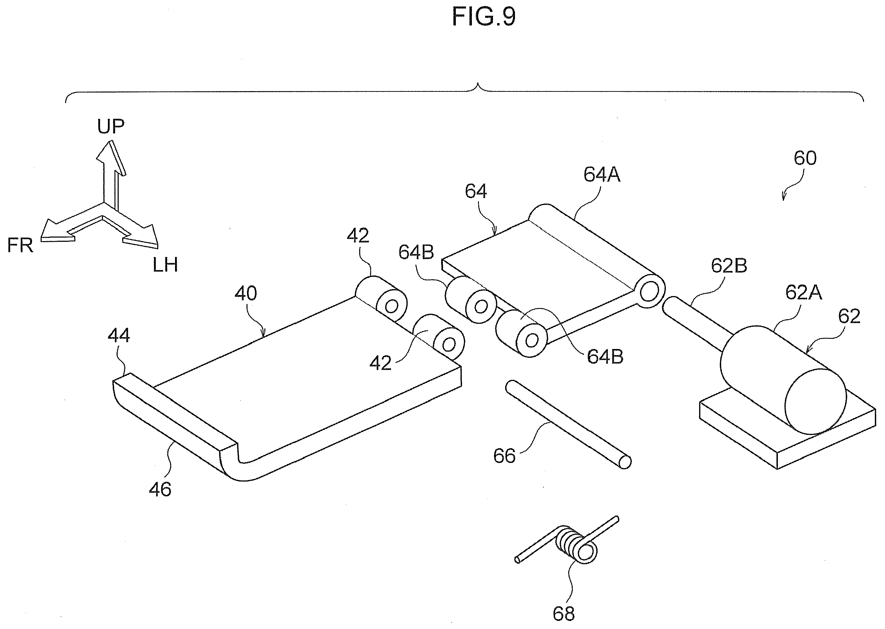

As shown in FIGS. 8A and 8B, and FIG. 9, the moving mechanism 60 includes a drive motor 62, a rotating plate 64 that serves as a 'rotating member', and a torsion spring 68 (see FIG. 9) that serves as an 'urging member'. Note that in FIGS. 8A and 8B, for the sake of convenience, the torsion spring 68 has been omitted from the drawings.

The drive motor 62 has a substantially circular column-shaped motor main body 62A, and an output shaft 62B that serves as a 'driveshaft' and that protrudes from one end portion of the motor main body 62A towards one side in the axial direction. The drive motor 62 is located at the seat rear side of the footrest 40 with the axial direction of the output shaft 62B aligned in the seat transverse direction. Moreover, the drive motor 62 is joined to the cushion frame 24 (see FIG. 7) via a bracket (not shown), and is located adjacent to the upper side of the floor portion 10 of the vehicle V. Note that, although omitted from the drawings, a recessed portion that is used to mount the drive motor 62 is formed in the floor portion 10. The drive motor 62 is also electrically connected to the control unit 54 (see FIG. 6), and the drive motor 62 is operated by the control unit 54.

The rotating plate 64 is formed in a substantially rectangular plate shape, and is located between the footrest 40 and the drive motor 62 at the seat rear side of the footrest 40. A fixed portion 64A is formed integrally with a rear-end portion of the rotating plate 64, and the fixed portion 64A is formed in a substantially circular cylinder shape whose axial direction is aligned in the seat transverse direction. The output shaft 62B of the drive motor 62 is fitted inside the fixed portion 64A, so that the rear-end portion (i.e., the fixed portion 64A) of the rotating plate 64 is fixed to the output shaft 62B. The output shaft 62B and the rotating plate 64 are thereby able to rotate integrally with each other around the axis of the output shaft 62B (i.e., in the directions shown by the arrow A and the arrow B in FIG. 7 and FIG. 8A).

Furthermore, a pair of first hinge portions 64B are formed integrally with the front-end portion of the rotating plate 64. The first hinge portions 64B are formed in a substantially circular cylinder shape whose axial direction is aligned in the seat transverse direction, and are placed a predetermined distance apart from each other in the seat transverse direction. A pair of second hinge portions 42 are also formed integrally with the rear-end portion of the footrest 40. The second hinge portions 42 are also formed in a substantially circular cylinder shape whose axial direction is aligned in the seat transverse direction. The first hinge portions 64B and the second hinge portions 42 are both placed on the same axis, and are positioned alternatingly in the seat transverse direction. A rod-shaped coupling shaft 66 having a circular cross-section is inserted inside the first hinge portions 64B and the second hinge portions 42, so that the rear-end portion of the footrest 40 is rotatably joined to the front-end portion of the rotating plate 64.

As shown in FIG. 9, the torsion spring 68 is provided at an end portion of the coupling shaft 66. One end portion of this torsion spring 68 is locked into the rotating plate 64, while the other end portion of the torsion spring 68 is locked into the footrest 40. The footrest 40 is urged by the urging force of the torsion spring 68 in a rotation direction to the seat lower side relative to the rotating plate 64 (i.e., in the direction shown by the arrow C in FIG. 7). By employing this structure, the front-end portion of the footrest 40 is brought into contact with the floor portion 10.

Moreover, as shown in FIG. 7, a stopper portion 44 that is bent towards the seat upper side is formed integrally with the front-end portion of the footrest 40. This stopper portion 44 is bent substantially at a right angle relative to the footrest 40, and a bent portion 46 that forms a proximal end portion of the stopper portion 44 is curved substantially in a circular arc shape when seen in a seat side view.

As shown by the double dot-chain line in FIG. 7, in the standby position of the footrest 40, the footrest 40 and the rotating plate 64 extend in the seat front-rear direction (i.e., are placed in a substantially horizontal state), and are disposed on the floor portion 10. Namely, the footrest 40 is configured such that the rear-end portion of the footrest 40 lies directly on the floor portion 10. In the standby position, the entire footrest 40 is located at the seat front side of the seat cushion 22. Therefore, the feet of the seated vehicle occupant P, which are resting on the footrest 40 in the standby position, are placed substantially horizontally in a position at the seat front side of the seat cushion 22.

When the drive motor 62 is operated so that the rotating plate 64 is rotated in the one rotation direction (i.e., in the direction of the arrow A in FIG. 7 and FIG. 8A) around the axis of the output shaft 62B of the drive motor 62, the rear-end portion of the footrest 40 (i.e., the second hinge portion 42) is displaced towards the seat rear side and the seat upper side, and the footrest 40 is placed in the raised position (see FIG. 7 and FIG. 8B). Namely, in the movement of the footrest 40 from the standby position to the raised position, while the front-end portion of the footrest 40 (specifically, the bent portion 46) remains in contact with the floor portion 10, the rear-end portion 40R of the footrest 40 is raised up from the floor portion 10, and at the same time the footrest 40 moves from the standby position towards the seat rear side.

Moreover, in the second embodiment, the footrest 40 is configured to be placed in the standby position in both the forward-facing position and the rearward-facing position of the vehicle seat 50. When the vehicle seat 50 is being rotated, the moving mechanism 60 is operated by the control unit 54 such that the footrest 40 is placed in the raised position. Specifically, the footrest 40 is placed in the raised position between the rotation position (2) and the rotation position (4) of the vehicle seat 50 that are shown in FIG. 4.

Furthermore, as shown in FIG. 6, a notification device 70 is electrically connected to the above-described control unit 54. When the seat cushion 22 is being operated (i.e., rotated) by the control unit 54, notification is given by the notification device 70 to the seated vehicle occupant P warning them to place their feet on the footrest 40. For example, the notification device 70 may generate an audio message via the speaker of the vehicle V such as "Please place your feet on the footrest". Alternatively, the notification device 70 may display a seat rotation sign for the vehicle seat 50 on a display inside the vehicle V, and warn the seated vehicle occupant P to place their feet on the footrest 40 by causing this seat rotation sign to flash on and off.

In the second embodiment, a pressure-sensitive sensor 72 is provided in the footrest 40, and the pressure-sensitive sensor 72 is electrically connected to the control unit 54. Based on signals output from the pressure-sensitive sensor 72, the control unit 54 determines whether or not the feet of the seated vehicle occupant P are placed on the footrest 40.

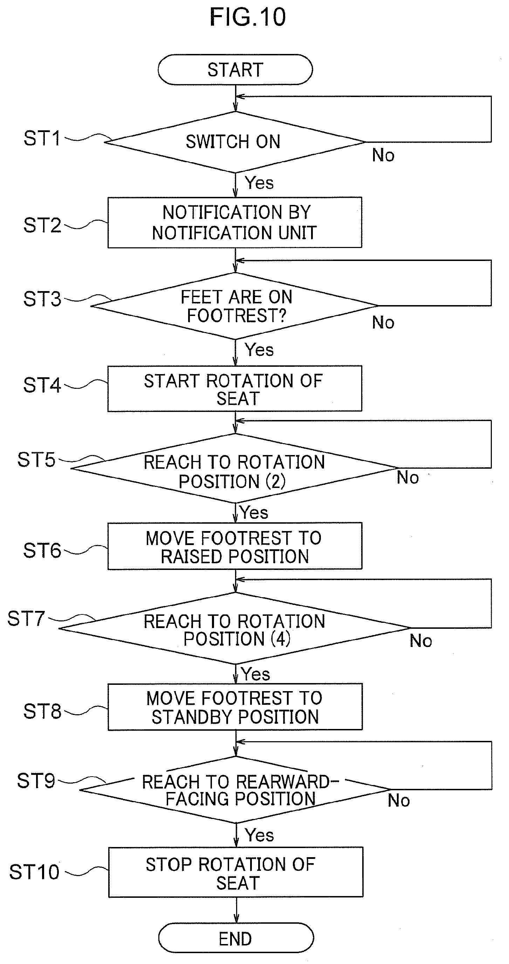

Next, the operation and effects of the second embodiment will be described using the flowchart shown in FIG. 10. This flowchart shows processing performed by the control unit 54 when a vehicle seat 50 that is facing towards the vehicle front side is rotated to a state in which it faces the vehicle rear side.

Firstly, in the forward-facing position of the vehicle seat 50 (i.e., in the state shown in (1) in FIG. 4), the footrest 40 is placed in the standby position. Accordingly, the entire footrest 40 is aligned substantially horizontally in a position at the seat front side of the seat cushion 22.

In the rotation of the vehicle seat 50, in step ST1, the control unit 54 determines whether or not the switch of the operating unit 56 has been turned on by the seated vehicle occupant P. If the control unit 54 determines that the switch of the operating unit 56 has been turned on, the routine moves to step ST2.

In step ST2, a notification is given by the notification device 70 to the seated vehicle occupant P warning them to place their feet on the footrest 40. After the processing of step ST2, the routine moves to step ST3.

In step ST3, the control unit 54 determines whether or not the seated vehicle occupant P has placed their feet on the footrest 40 based on a signal output from the pressure-sensitive sensor 72. When the control unit 54 determines that the seated vehicle occupant P has placed their feet on the footrest 40, the routine moves to step ST4.

In step ST4, the rotation motor 52 is operated under the control of the control unit 54 and the rotation of the vehicle seat 50 commences. As a consequence, the vehicle seat 50 is rotated from the forward-facing position so as to face towards the center in the vehicle transverse direction. After the processing of step ST4, the routine moves to step ST5.

In step ST5, the control unit determines 54 whether or not the vehicle seat 50 has reached the rotation position (2) shown in FIG. 4 based on a signal output from the angle sensor 58. When the control unit 54 determines that the vehicle seat 50 has reached the rotation position (2), the routine moves to step ST6.

In step ST6, the drive motor 62 of the moving mechanism 60 is operated under the control of the control unit 54. As a result, the rotating plate 64 is rotated in the one rotation direction (i.e., in the direction of the arrow A in FIG. 7) around the axis of the output shaft 62B, and the footrest 40 is moved from the standby position to the raised position. Specifically, the footrest 40 is moved to the seat rear side of the standby position, while the rear-end portion 40R of the footrest 40 is raised up from the floor portion 10 at the same time as the bent portion 46 of the footrest 40 is sliding along the floor portion 10. As a result of this, the heel portions of the seated vehicle occupant P are moved into the space G at the seat lower side of the front-end portion of the seat cushion 22 while the heel portions remain raised up off the floor portion 10. As a result of this, the vehicle seat 50 passes through the rotation position (3) while the heel portions of the seated vehicle occupant P remain housed inside the space G. Once the processing of step ST6 has ended, the routine moves to step ST7.

In step ST7, the control unit 54 determines whether or not the vehicle seat 50 has reached the rotation position (4) shown in FIG. 4 based on a signal output from the angle sensor 58. When the control unit 54 determines that the vehicle seat 50 has reached the rotation position (4), the routine moves to step ST8.

In step ST8, the drive motor 62 of the moving mechanism 60 is operated under the control of the control unit 54. Specifically, the rotating plate 64 that has been placed in the raised position is rotated around the axis of the output shaft 62B in the other rotation direction (i.e., in the direction shown by the arrow B in FIG. 7), so that the footrest 40 is moved from the raised position to the standby position. More specifically, the footrest 40 is moved to the seat front side of the raised position, while the rear-end portion 40R of the footrest 40 is placed in contact with the floor portion 10 at the same time as the bent portion 46 of the footrest 40 is sliding along the floor portion 10. As a result of this, the feet of the seated vehicle occupant P are moved from the raised position to the standby position, and are placed on the seat front side of the seat cushion 22. After the processing of step ST8, the routine moves to step ST9.

In step ST9, the control unit 54 determines whether or not the vehicle seat 50 has reached the rearward-facing position based on a signal output from the angle sensor 58. When the control unit 54 determines that the vehicle seat 50 has reached the rearward-facing position, the routine moves to step ST10.

In step ST10, operations of the rotation motor 52 are stopped under the control of the control unit 54. As a result, the rotation of the vehicle seat 50 is stopped, and the vehicle seat 50 is placed in the rearward-facing position.

By employing the above-described structure, in the second embodiment as well, because the footrest 40 is placed in the raised position during a rotation of the vehicle seat 50, the same operation and effects as in the first embodiment can be achieved.

Note that in the above-described rotation of the vehicle seat 50, an example is described in which the vehicle seat 50 is rotated from the forward-facing position to the rearward-facing position, however, it is also possible to rotate the vehicle seat 50 from the rearward-facing position to the forward-facing position. Namely, in this case, in step ST5, when the control unit 54 determines that the vehicle seat 50 has reached the rotation position (4), then in step ST6, the moving mechanism 60 is put into operation and the footrest 40 is moved from the standby position to the raised position. After the vehicle seat 50 rotates even further and when the control unit 54 determines in step ST7 that the vehicle seat 50 has reached the rotation position (2), then in step ST8, the moving mechanism 60 is put into operation and the footrest 40 is moved from the raised position to the standby position.

Moreover, as is described above, in the second embodiment, the footrest 40 is joined to the seat cushion 22 by the moving mechanism 60, and the footrest 40 is moved by the operation of the moving mechanism 60 to the standby position that is located at the seat front side of the raised position. Because of this, when the vehicle seat 50 is in normal use (i.e., when the vehicle seat 50 is in the forward-facing position or the rearward-facing position), the footrest 40 can be placed in the standby position that is located at the seat front side. In the standby position the footrest 40 is placed on the floor portion extending in the seat front-rear direction when seen in a seat side view. Because of this, the feet of the seated vehicle occupant P which are resting on the footrest 40 which is in the standby position are arranged substantially horizontally in a position at the seat front side of the seat cushion 22. As a consequence, the comfort of the seated vehicle occupant P can also be maintained when the feet of the seated vehicle occupant P are resting on the footrest 40 during the normal use of the vehicle seat 50.

Furthermore, the moving mechanism 60 that moves the footrest 40 between the standby position and the raised position is joined to the rear-end portion of the footrest 40, and is also located at the seat rear side of the footrest 40. Because of this, the moving mechanism 60 is able to move the footrest 40 between the standby position and the raised position without the moving mechanism 60 needing to be located at the seat front side of the footrest 40.

Moreover, in the second embodiment, the drive motor 62 is driven by the control unit 54 in accordance with the angle of rotation of the seat cushion 22 such that the footrest 40 is placed in either the standby position or the raised position. Specifically, when the vehicle seat 50 is rotating between the rotation position (2) and the rotation position (4), the footrest 40 is placed in the raised position. Because of this, during this rotation of the vehicle seat 50, the footrest 40 is automatically placed in the raised position at the rotation position (3) where the space at the seat front side of the vehicle seat 50 is the narrow. Consequently, the convenience for the seated vehicle passenger P can be improved.

Furthermore, the front-end portion of the footrest 40 is formed as the stopper portion 44 that is bent towards the seat upper side. Because of this, any relative movement of the feet of the seated vehicle occupant P on the footrest 40 towards the seat front side is restricted by the stopper portion 44, and the toes of the seated vehicle occupant P are protected by the stopper portion 44.

Moreover, the bent portion 46 which forms the proximal end portion of the stopper portion 44 is curved in an arc shape when seen in a seat side view. Because of this, when the footrest 40 is moving between the standby position and the raised position, the front-end portion of the footrest 40 is able to slide smoothly over the floor portion 10.

Note that, in the second embodiment, the output shaft 62B of the drive motor 62 of the moving mechanism 60 is fixed to the fixed portion 64A of the rotating plate 64, however, the structure of the moving mechanism 60 is not limited to this. For example, it is also possible to fix a rotation shaft separately from the output shaft 62B onto the fixed portion 64A of the rotating plate 64, and to provide a deceleration mechanism that decelerates the rotation of the output shaft 62B between this rotation shaft and the output shaft 62B of the drive motor 62.

In the second embodiment, a structure is employed in which, when the vehicle seat 50 is rotating between the rotation positions (2) ∼ (4), the footrest 40 is placed in the raised position, however, the rotation positions of the vehicle seat 50 where the footrest 40 is placed in the raised position can be set to any desired position. Namely, the rotation positions of the vehicle seat 50 where the footrest 40 is placed in the raised position may be appropriately set in accordance with the placement structure inside the cabin C of each type of vehicle.

Moreover, in the second embodiment, the bent portion 46 that forms the proximal end portion of the stopper portion 44 of the footrest 40 is curved in a substantially circular arc shape when seen in a seat side view, however, the shape of the bent portion 46 is not limited to this. For example, it is also possible for the bent portion 46 to slope towards the seat upper side from the front end of the footrest 40 towards the seat front side, and for the bent portion 46 to then connect to the bottom end of the stopper portion 44.

Moreover, in the second embodiment, the footrest 40 is aligned substantially horizontally in the standby position, however, it is also possible for the footrest 40 to be disposed so as to slope slightly towards the seat upper side in the seat rear side when seen in a seat side view.

In the first embodiment, the stopper portion 44 of the second embodiment is not formed on the front-end portion of the footrest 40, however, it is also possible to form the stopper portion 44 of the second embodiment on the footrest 40 of the first embodiment as well.

In both the first embodiment and the second embodiment, the vehicle seats 20 and 50 are applied to three-row seating vehicles, however, the vehicle seats 20 and 50 may also be applied to two-row seating vehicles.

## Claims

1. A vehicle seat (20, 50) comprising:
a seat cushion (22) that is configured to be rotatably joined to a floor portion (10) of a vehicle (V) such that an axial direction of the seat cushion (22) is aligned in an up-down direction of the seat (20), and configured to support a buttocks portion of a seated vehicle occupant (P); and
a footrest (40) that is joined to the seat cushion (22) and configured to support soles of feet of the seated vehicle occupant (P), and that is placed in a raised position in which, when seen in a seat side view, the footrest (40) slopes upwards towards a seat rear side such that heel portions of the seated vehicle occupant (P) are raised up, and a rear end portion (40R) of the footrest (40) is placed at a seat rear side of a front end of the seat cushion (22).

2. The vehicle seat (50) according to claim 1, further comprising a moving mechanism (60) that joins the footrest (40) to the seat cushion (22), the moving mechanism (60) causing the footrest (40) to move between a standby position, in which the footrest (40) is located at a seat front side of the raised position, and the raised position,
wherein, in the standby position, the rear end portion (40R) of the footrest is configured to lie directly on the floor portion (10).

3. The vehicle seat (50) according to claim 2, wherein the moving mechanism (60) comprises:
a drive motor (62) that is located at a seat lower side of the seat cushion (22);
a rotation shaft (62B) that is located at the seat rear side of the footrest (40), and that is configured to be rotated around an axis of the rotation shaft by drive force from the drive motor (62), the direction of the axis of the rotation shaft being a seat transverse direction;
a rotating member (64) whose front-end portion (64B) is rotatably joined to the rear end portion (42) of the footrest (40) with the seat transverse direction taken as the direction of the rotation axis, and whose rear-end portion (64A) is fixed to the rotation shaft (62B) such that the rear-end portion (64A) rotates integrally with the rotation shaft (62B); and
an urging member (68) configured to cooperate with the rotating member (64) and the footrest (40), and to urge the front-end portion of the footrest (40) towards the seat lower side,
wherein the drive motor (62) causes the front-end portion (64B) of the rotating member (64) to rotate in the seat up-down direction, so that the footrest (40) is moved between the standby position and the raised position.

4. The vehicle seat (50) according to claim 3, further comprising:
an angle sensor (58) configured to detect an angle of rotation of the seat cushion (22) relative to the floor portion (10); and
a control unit (54) that is electrically connected to the angle sensor (58) and the drive motor (62), and that is configured to control operations of the drive motor (62),
wherein the control unit (54) causes the drive motor (62) to operate in accordance with the angle of rotation of the seat cushion (22) so as to place the footrest (40) in the standby position or the raised position.

5. The vehicle seat (50) according to claim 3 or claim 4, wherein
the footrest (40) is formed in a plate shape,
the front-end portion of the footrest (40) is formed as a stopper portion (44) that is bent towards a seat upper side, and
the stopper portion includes a bent portion (46) at a proximal end portion thereof, the bent portion (46) being curved in an arc shape when seen in a seat side view.

6. A vehicle comprising:
the vehicle seat (20, 50) according to any one of claims 1 through 5; and
an automated driving support device that switches between automated driving and manual driving,
the vehicle being configured such that, after the automated driving support device has switched the manual driving to the automated driving, the seat cushion (22) is enabled to rotate relative to the floor portion (10).
